# EUROPEAN PATENT APPLICATION

(11) **EP 2 701 022 A1**
(43) Date of publication of application: **26.02.2014**
(21) Application number: 13191437.6
(22) Date of filing: 04.09.2009
(51) Int. Cl.: G05B 19/404, F16F 15/00

(54) **Motion control system with digital processing link**

(30) Priority: 06.09.2008 US 94895 P
(62) Divisional of application: 09792284.3
(71) Applicant: Lord Corporation, Cary, NC 27511 (US)
(72) Inventor: Hildebrand, Stephen F., Apex, NC 27502 (US); Swanson, Douglas, Cary, NC 27519 (US); Ferguson, Matthew, Fairview, PA 16415 (US); Smith, Matthew A., Erie, PA 16509 (US)
(74) Representative: Börner, Robert

(57) **Abstract**

A digital processing link for a vibration control system collects sensor signals at a transfer station and combines the sensor signals into a collective signal that is transmitted under a digital communications protocol to a base station. The sensor signals are separated at the base station and individually processed to produce one or more output control signals to actuators for counteracting the measured vibration.

## Description

### CROSS-REFERENCE TO RELATED APPLICATIONS

The present application claims priority to U.S. Provisional Patent Application Serial No. 61/094,895 filed September 6, 2008, and which is incorporated herein by reference.

### TECHNICAL FIELD

The invention relates generally to active vibration systems, which counteract ongoing vibrations, and active balancing systems, which counteract the onset of vibrations, particularly for applications in the aerospace and machine tool industries, and including power and communication links within the systems, such as links between sensors, controllers, and actuators.

### BACKGROUND OF THE INVENTION

Active vibration and balancing systems generally require a plurality of sensors for sensing vibrations, motions, and other environmental or performance variables to provide feedback to system controllers for controlling actuators. For example, accelerometers monitor vibrations, tachometers monitor the speed of rotating parts, such as propellers or machine spindles associated with the generation of the vibrations, and position sensors monitor operating performance of actuators.

Wiring to and from the sensors for delivering power to the sensors and for communicating data from the sensors particularly over large distances can add considerable weight and bulk to active vibration and balancing systems and subject the transmissions to environmental electromagnetic influences. Transmissions from sensors with low signal levels or over long runs of wires are particularly susceptible to such electromagnetic disturbances. Environments of machine tools and aircraft, requiring active vibration or balancing systems, often contain strong electromagnetic fields that can disrupt the transmission of sensor data over even short distances of travel. Similar problems can exist for data exchanges with actuators, particularly for actuators that are separated from their controllers or susceptible to intervening electromagnetic fields.

### SUMMARY OF THE INVENTION

Preferred implementations of the invention provide secure data exchanges between groups of sensors and controllers of active vibration and balancing systems under a digital protocol that is largely impervious to local electromagnetic disturbances, electrical surges, and other environmental influences. Signals from multiple sensors combine at a transfer station under the digital protocol and transmit together over common wiring pairings to a base station associated with the controller. The wire pairings, which preferably include pairings for both transmitting and receiving data, also convey error-checking communications in accordance with the digital protocol and also provide for transmitting electrical power. Although signals from multiple sensors are collectively transmitted over the same wire pairings, transmission speeds can be increased while more evenly spreading the energy content of the transmissions to reduce the generation of electromagnetic interference that could otherwise affect other communications.

One implementation of the invention as a motion control system for regulating vibrations includes the usual features of a plurality of sensors for acquiring information about the vibrations, an actuator for counteracting the vibrations, and a controller for both processing the information acquired from the sensors and controlling the actuator to counteract the vibrations. In addition, the motion control system features a digital processing link between the plurality of sensors and the controller. The digital processing link includes a transfer station associated with the sensors and a base station associated with the controller. The transfer station includes a multiplexer/demultiplexer for combining signals from the sensors into a collective signal and a communication node for transmitting the collective signal under a communications protocol. The base station includes another communication node for receiving the collective signal under the communications protocol and a demultiplexer/multiplexer for dividing the collective signal into a plurality of separately processable digital signals. Data transmit and receive lines interconnect the transfer and base stations. The controller processes the digital signals from the base station and outputs a control signal for controlling the actuator to regulate vibrations.

The communication node of the base station and also be arranged to transmit the control signal for the actuator under the communications protocol. Where the actuator is located near the sensors, such as may be found in an active balancing system, the communication node of the base station transmits the control signal to the actuator over the data transmit and receive lines to the communication node of the transfer station. The actuator may be one of a plurality of actuators, and the controller can be arranged to output multiple control signals. The demultiplexer/multiplexer of the base station combines the multiple control signals into a collective control signal for transmission over the data transmit and receive lines, and the multiplexer/demultiplexer of the transfer station divides the collective control signal into a plurality of control signals that can be separately directed to the actuators.

The actuator can be one of a plurality of actuators and a second digital link can be provided between the same base station and a second transfer station for interconnecting the plurality of actuators with the base station. The demultiplexer/multiplexer of the base station combines output control signals for the actuators into a collective output control signal, and the communication node of the base station transmits the collective output control signal under the communications protocol to the second transfer station. A communication node of the second transfer station receives the collective output control signal and a multiplexer/demultiplexer of the second transfer station divides the collective output control signal into a plurality of control signals to the actuators.

The digital processing links can be used for transmitting power between the base and transfer stations. A power supply associated with the base station is coupled to the data transmit and receive lines for transmitting electrical power to the transfer station. A transformer at the transfer station receives the electrical power over the data transmit and receive lines and conditions the power for delivery to one or more of the sensors.

Preferably, the communication node of the transfer station converts the collective signal into a series of frames having a prescribed format for monitoring and resending errant transmissions. In addition, the communication node of the transfer station preferably spreads the energy content of the collective signal over the data transmit lines to reduce electrical interference. The communication node of the transfer station also preferably includes protection circuitry in the form of a disconnect to avoid transmitting lightning surges. The transfer station can include an analog to digital converter to convert analog signals from the sensors into digital signals.

The actuator preferably amplifies force at one or more tuned frequencies. For example, the actuator can include one or more eccentric masses that are rotatable about a rotation axis or a translatable mass that is reciprocable along a linear axis. The plurality of sensors can include accelerometers used for sensing vibration. The transfer station is preferably positioned for reducing an average distance between the transfer station and the plurality of sensors.

Another implementation of the invention as an active balancer for a rotatable shaft includes one or more eccentric masses that are positionable with respect to a rotational axis of the rotatable shaft. A driver repositions the one or more eccentric masses with respect to the rotational axis of the rotatable shaft. A plurality of sensors including one or more rotation sensors together with one or more vibration sensors monitor performance characteristics of the rotatable shaft. A controller processes the information acquired from the sensors and controls the operation of the driver to reduce vibrations in the rotatable shaft. A transfer station collects information from the sensors, and a base station is connected to the controller. Data is sent and received between the transfer and base stations under a communications protocol that also provides for monitoring and resending errant transmissions.

The driver can be formed as a part of a coil block within which one or more of the plurality of sensors is embedded. The plurality of sensors preferably includes one or more sensors within the coil block for monitoring the position of the one or more eccentric masses.

The transfer station preferably includes a multiplexer/demultiplexer for combining signals from the sensors into a collective signal and a communication node for transmitting the collective signal under the communications protocol. The base station preferably includes another communication node for receiving the collective signal under the communications protocol and a demultiplexer/multiplexer for dividing the collective signal into a plurality of separately processable digital signals. Data transmit and receive lines preferably interconnect the transfer and base stations for exchanging information under the communications protocol, and a power supply associated with the base station preferably provides electrical power for transmission over the data transmit and receive lines to the transfer station.

Yet another implementation of the invention as an active vibration control system minimizes vibrations in a structure that supports a member for rotation. A plurality of sensors mounted with the structure monitor vibrations. One or more actuators drive respective movable masses at tuned frequencies. A controller receives information from the plurality of sensors and controls operation of the one or more actuators for cancelling sensed vibrations within the structure. A transfer station, which collects information from the sensors, and a base station, which is connected to the controller, exchange information under a communications protocol in a prescribed format for monitoring and resending errant transmissions.

The invention can also be implemented as a method of counteracting vibration. Vibrations are monitored using a plurality of sensors. Signals output from the plurality of sensors convey information about the vibrations. The signals from the sensors are combined at a transfer station into a collective signal, and the collective signal is transmitted over data transmit and receive lines under a communications protocol in a prescribed format for monitoring and resending errant transmissions. The collective signal is received under the communications protocol at a base station associated with a controller. Power from a power source associated with the base station is also transmitted over the data transmit and receive lines to the transfer station. The power received at the transfer station is distributed to one or more of the sensors. The collective signal received at the base station is divided into a plurality of processable digital signals. The digital signals are processed within the controller, and a signal is output from the controller to an actuator for counteracting the monitored vibrations.

Preferably, the sensors are distributed according to results from an optimization study. The transfer station is preferably located among the sensors for reducing an average distance between the sensors and the transfer station.

Other implementations of the invention include a method of making a motion control system, a method of controlling machine vibrations, and a method of controlling vibrations in an aircraft structure.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

### BRIEF DESCRIPTION OF THE DRAWING FIGURES

FIG. 1 is a block diagram showing a digital processing link between a base station containing a controller and a transfer station connected to both a plurality of sensors and a plurality of actuators.

FIG. 2 is a diagram of an active balancing system incorporating the digital processing link of FIG. 1.

FIG. 3 is a block diagram showing the arrangement of a transfer station as embedded within a coil assembly.

FIG. 4 is a diagram showing balancer rotor positions for producing a counteracting an imbalance.

FIG. 5 is a block diagram of an influence coefficient based control algorithm.

FIG. 6 is an electrical schematic of a digital processing link for a spindle balancer.

FIG. 7 is a diagram of an aircraft propeller balancer within a section of a fuselage.

FIG. 8 is a block diagram of an active vibration control system incorporating a digital processing link in accordance with the invention.

FIG. 9 is a block diagram of a control algorithm for the active vibration control system of FIG. 8.

### DETAILED DESCRIPTION OF THE INVENTION

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present preferred embodiments of the invention, examples of which are illustrated in the accompanying drawings.

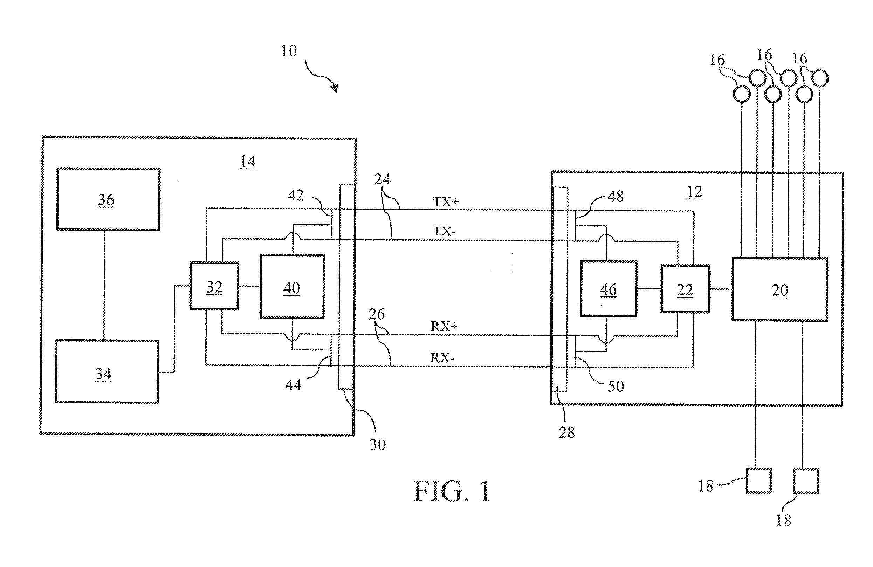

An exemplary digital processing link 10 depicted in FIG. 1 interconnects a transfer station 12 with a base station 14. The transfer station 12 provides a common routing for input signals from a plurality of sensors 16 and for output signals to a plurality of actuators 18. Within the transfer station a multiplexer/demultiplexer 20, such as a field programmable gate array of a digital multiplexer, combines the input signals from the plurality of sensors into a single collective sensor signal that is transferred to a communication node 22. An analog-to-digital converter for the sensor signals can be realized in field programmable gate array or dedicated circuitry can be provided for this purpose.

The communication node 22, which can be implemented with an LVDS (low voltage differential signaling) or RS422 chip together with an Ethernet interface, transmits the collective sensor signal under a communications protocol that converts the collective sensor signal into a series of frames having a prescribed format for monitoring and resending errant transmissions to the base station 14. Twisted wire pairings 24 and 26, which include data transmit and receive lines interconnecting the transfer and base stations 12 and 14, convey the collective sensor signal under the prescribed protocol. The protocol temporally spreads energy content of the collective sensor signal over the twisted wire pairings 24 and 26 to reduce the generation of electrical interference. Protection circuitry 28, including an automatic disconnect, can be incorporated into the transfer station 12 to provide surge protection against lightning strikes or other spurious high voltage disturbances. Similar protection circuitry 30 can be provided at the base station 14.

A similar communication node 32 within the base station 14 receives the collective sensor signal under the communications protocol and a similar demultiplexer/multiplexer 34 divides the collective sensor signal into a plurality of separately processable digital signals. A controller 36, which includes a digital signal processor operating under control software, receives the individual sensor signals and generates a plurality of output control signals for controlling the actuators 18. U.S. Patent Nos. 5,757,662 and 6,236,934, which are hereby incorporated by reference, describe active balancers, also referred to as unbalance compensators, having control structures and algorithms for converting sensor signals relating to the unbalance to control signals for eccentrically driven mass actuators.

The demultiplexer/multiplexer 34 combines the plurality of output control signals into a single collective control signal, which is converted by the communication node 32 for transmission under the communications protocol through the wire pairings 24 and 26 to the communication node 22 transfer station 12. The multiplexer/demultiplexer 20 of the transfer station 12 divides the collective control signal into a plurality of individual control signals that are separately directed to the plurality of actuators 18.

Although the digital processing link 10 is capable of communicating both a plurality of sensor signals and a plurality of control signals under a preferred communications protocol, such as an Ethernet protocol, the digital processing link 10 could be arranged to communicate only the sensor signals or only the control signals or the base station could be combined with more than one transfer station to separately convey the sensor and control signals.

In addition to supporting digital communications, the digital processing link 10 also supports the transmission of electrical power from the base station 14 to the transfer station 12. A power supply 40 is mounted within the base station 14 and separately connected to the twisted wire pairs 24 and 26 through the electrical couplings 42 and 44 according to a standard implementation such as a Power over Ethernet (PoE) system. Within the transfer station 12, a transformer 46 receives the electrical power through electrical couplings 48 and 50 for powering one or more of the sensors 16 or other devices within or otherwise associated with the transfer station 12.

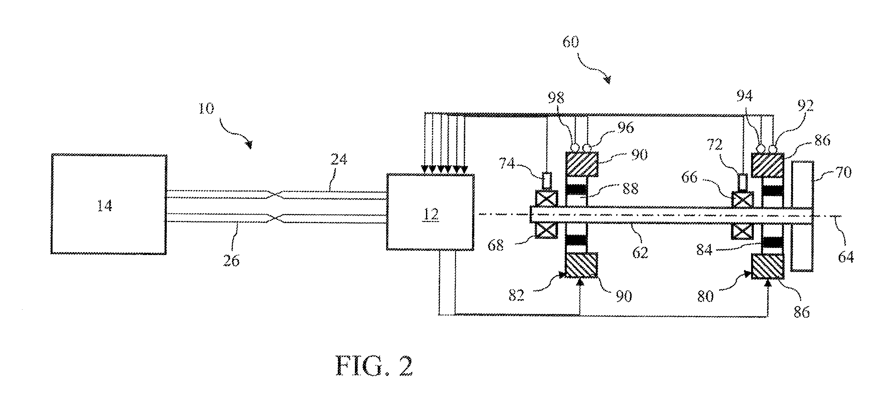

An implementation of the digital processing link 10 is as a part of an active balancing system 60, such as depicted in FIG. 2. Imbalances within rotating appliances, such as tool or workpiece spindles, can be a significant source of harmful vibration in many types of rotating machinery. Correction is accomplished by producing counteracting imbalances, such as by the addition, removal, or redistribution of mass of the rotating appliances. Often, the restoration of rotational symmetry generally can only be approximated because of limited access to the sources of the asymmetry. In addition, dynamics of the balancer and the machine impedance can require the imbalance corrections to be adapted to changing speeds.

Continuous balancing processes, also referred to as active balancing processes, adapt to changing balancing requirements. As such, reliable communications are required during machine operation for conveying sensor signals about the changing conditions and for conveying control signals for making ongoing balancing corrections. Electromagnetic environments of electronically controlled machine tools, rotary powered aircraft, or other rotating machinery, such as industrial fans, can produce electrical interference that and disrupt the transmission of sensor and control signals, especially such signals that are inherently weak or required to travel considerable distances.

As shown in FIG. 2, the digital processing link 10 of FIG. 1 is adapted as a critical part of the active balancing system 60. A rotary spindle or shaft 62 supported for rotation about a rotary axis 64 by anterior and posterior bearings 66 and 68 carries a rotary body 70, which can take various forms including a machining implement (tool), a workpiece, a propeller, or a fan blade. Vibration sensitive sensors 72 and 74, which can take the form or accelerometers, supply ongoing information concerning the magnitudes and phases of vibrations imparted by the rotation of the spindle or shaft 62. Analog to digital converters can be incorporated into the transfer station if necessary to convert the sensor signals into a digital form.

Correction is provided by anterior and posterior balancers 80 and 82, which provide corrections in two traverse planes adjacent the anterior and posterior bearings 66 and 68. The two balancers 80 and 82 include adjustable rotor assemblies 84 and 88 that rotate together with the spindle or shaft 62 and coil assemblies 86 and 90 that provide for angularly adjusting rotors within the assemblies 84 and 88 for effecting the balance corrections. Status sensors 92, 94, 96 and 98 are embedded within the coil assemblies 88 and 90 for reporting on the performance of the spindle or shaft 62 and the balancers 80 and 82. The status sensors 92, 94, 96 and 98 can include Hall Effect sensors for monitoring the speed and relative location of the rotors, temperature sensors, and digital accelerometers, all preferably integrated in the coil assemblies 88 and 90.

Both the vibration information acquired by the vibration sensors 72 and 74 and the status information acquired by the performance sensors 92, 94, 96, and 98 are routed as shown to the transfer station 12. Especially if just one of the balancers 80 and 82 is used for performing the balancing operation, the transfer station 12 itself can be integrated into one of the coil assemblies 86 and 90 (e.g., located within one or more boards that reside within the coil assembly).

As described with respect to the digital processing link of FIG. 1, the sensor signals are combined and collectively transmitted under the digital communications protocol to the base station 14, where the sensor signals are separated and processed according to a known algorithm for generating output control signals for operating the respective coil assemblies 86 and 90, which function as actuators 18. Although the output control signals could be directly routed to the coil assemblies 86 and 90, the base station 14 preferably provides for combining and collectively transmitting the control signals under the digital communications protocol to the transfer station, where the control signals are separated and further routed to the respective coil assemblies 86 and 90. The base station 14 together with the PoE system can also be used to supply power through the same wire pairings 24 and 26 that support the digital communications between the base station 14 and the transfer station 12 for delivering power to any the sensors 72, 74, 92, 94, 96, 98 or other devices associated with the transfer station 12.

The base station 14, which includes the system controller 36 with embedded software, can be located remote from the transfer station 12 or even incorporated into the controller of the machine tool, aircraft, or other rotary machine requiring balancing. The communications between the base station and the transfer station are protected against environmental electrical disturbances and themselves produce little electrical interference to other communications.

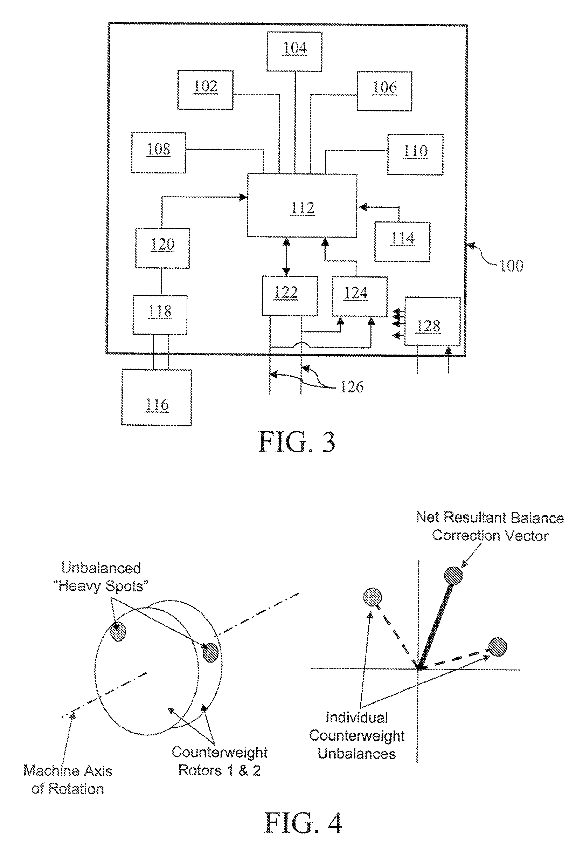

FIG. 3 illustrates an arrangement of a transfer station 100 embedded in a coil assembly of a balancer. Depicted are three Hall Effect sensors 102, 104, and 106, a temperature sensor 108, and a digital accelerometer 110 all connected to a multiplexer/demultiplexer, preferably implemented within a field programmable gate array 112. Also coupled to the field programmable gate array 112 is an oscillator 114 for driving the digital accelerometer 110. A second oscillator (not shown) can be provided for driving the field programmable gate array 112. As an alternative or addition to the embedded digital accelerometer 110, an external analog accelerometer 116 can be used together with a signal conditioner 118 and an analog to digital converter 120 to supply vibration information to the field programmable gate array 112. The various sensor signals are combined within the field programmable gate array and directed to a communication node, shown here as including a pair of digital communication chips 122 and 124 (e.g., LVDS or RS422) for transmitting and receiving data under a digital communications protocol (Ethernet) through the wire pairings 126 to a base station (not shown).

The active balancing system 60 of FIG. 2 illustrates active balancing in two planes adjacent to spaced bearing supports 66 and 68 for the spindle or shaft 62. However, a single balancer may be sufficient for removing vibration-inducing imbalances if located close to the source of the imbalance, such as an imbalanced workpiece.

As shown in FIG. 4, the balancers 80 and 82 each preferably include two rotors with embedded imbalances that are angularly adjustable about the rotational axis 64 of the spindle or shaft 62. The imbalance setting is achieved by (a) angularly adjusting the rotors relative to each other for adjusting a magnitude of the imbalance correction and (b) jointly adjusting the rotors about the axis 64 of spindle or shaft 62 for adjusting the angular orientation or phase angle of the imbalance correction.

The balancers 80 and 82 sense vibration and make imbalance adjustments to reduce the vibration. The controller 36 continuously monitors accelerometer vibration levels and when the vibration exceeds a maximum allowable level set in the software, the controller 36 determines the magnitude and phase angle of the required imbalance correction. Control signals output from the controller 36 can be in the form of precisely shaped current pulses to the balancer coil assemblies 86 and 90 to move the rotors to new angular positions. When the vibration level is below the maximum allowable level, the rotors remain in their set angular positions without further input from the controller 36.

Status information from the balancer coil assemblies 86 and 90 along with the accelerometer vibration signals provide inputs to an adaptive algorithm within the controller 36. The preferred algorithm calculates system dynamic coefficients and generates amplifier output control signals to the coil assemblies 86 and 90. The output control signals angularly shift the weighted rotor assemblies to desired angular positions. The coil assemblies are fixed to a stationary frame or housing, and actuating power is passed across an air gap in the form of magnetic fields. The use of permanent magnets allows the counterweight rotors to be fixed in place passively without external power.

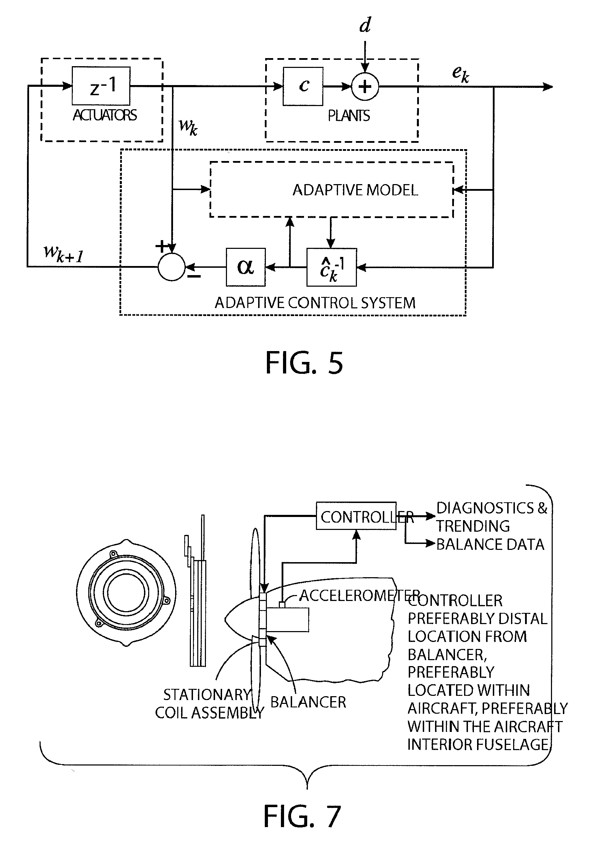

The control algorithm is preferably based on the use of so-called "influence coefficients", which are complex-valued transfer function coefficients that relate unbalance input from a certain balance plane to steady-state output of the associated vibration sensors 72 or 74 at a given rotational speed. These influence coefficients can be obtained experimentally or through adaptive control methods. For example, vibration data can be sampled during each of a plurality of vibration control iterations and demodulated to obtain a complex-valued tonal vibration. Based on the measured vibration data and stored influence coefficients, the controller computes the angular positions or the rotors required to minimize the sensed vibration. Preferably, the control re-computes influence coefficients after each correction for adapting to changing conditions. A preferred control algorithm, as schematically depicted in FIG. 5, is disclosed in a publication of S. W. Dyer, W. Winzenz, and G. Billoud entitled "Active In-Process Balancing" in the Proceedings of the XIII^{th} Symposium Vibrations, Shocks & Noise, Lyon France, 2002, which publication is hereby incorporated by reference.

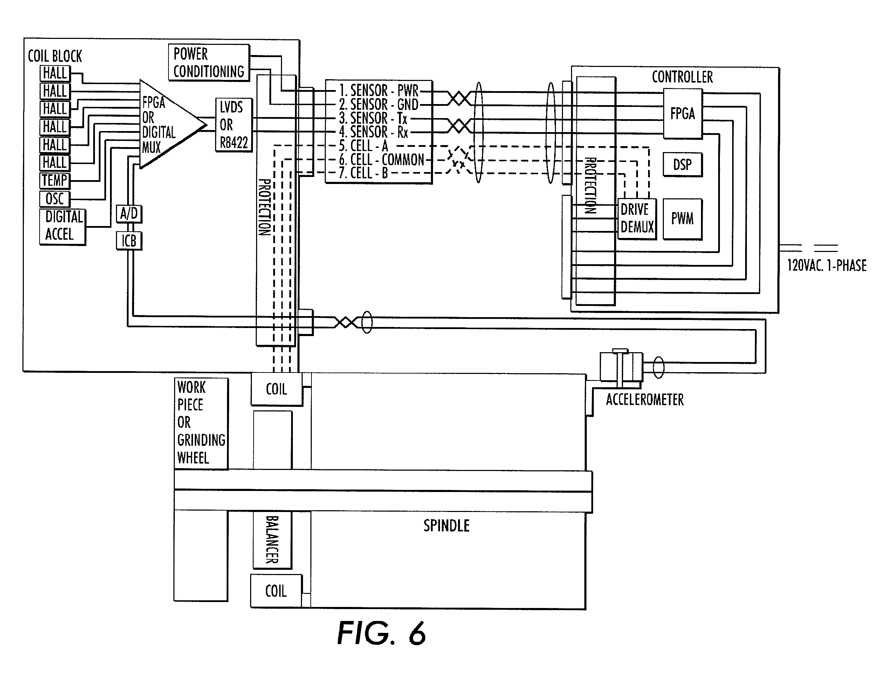

FIG. 6 provides an electrical schematic diagram of a digital processing link for a spindle balancer.

The active balancing system 60 can be applied to In-Flight Propeller Balancing Systems (IPBS) for aircraft such as the C-130 and E2C aircraft propellers. This system can be designed to reduce once-per-revolution (1P) vibration levels at the propeller and gearbox such as may be caused by static or dynamic imbalances of the propeller. A schematic of the balance system is shown in FIG. 7.

The balance system preferably operates autonomously to monitor the propeller imbalance during both ground idle and in-flight operations and counteracts the monitored imbalances to reduce vibrations. During in-flight operations, aircraft propellers can be damaged by impacts from foreign objects that imbalance the propellers and produce cabin noise and vibration. The required balance corrections can also vary for different engine power settings or aerodynamic propeller loading. On variable pitch propellers, minor variations in the pitches and contours of the blades can produce once-per-revolution vibrations. Thus, active balancing, involving critical in-flight communications between the balancer and the balancer controller, is required to compensate for the dynamic balance changes in different flight conditions. The active balancing system 60 can reduce the once-per-revolution (1P) vibration caused by both the static and the aerodynamic imbalance and thus improve the life of the propeller assembly and other engine components.

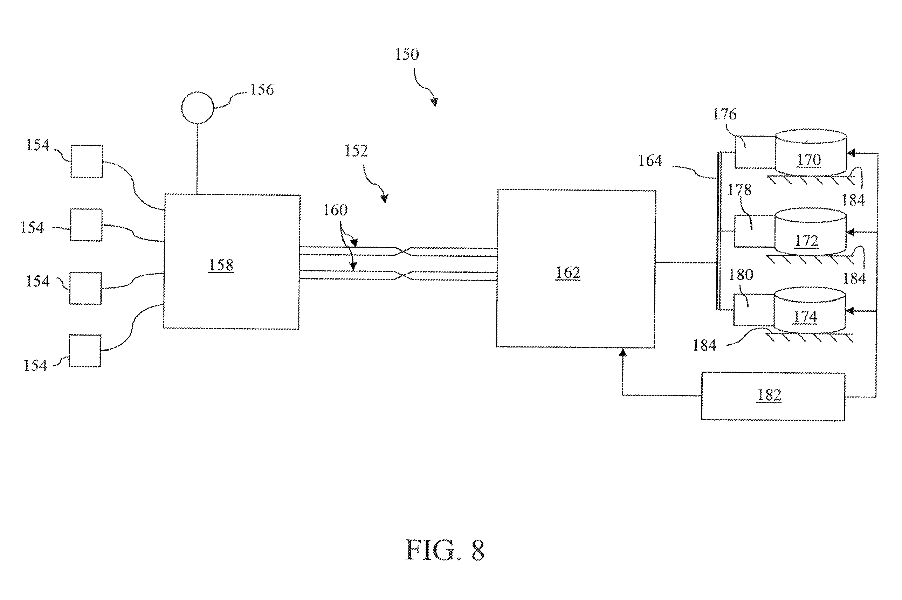

An active vibration control system 150, as shown in FIG. 8, similarly benefits from a digital processing link 152 in accordance with the invention. The active vibration control system 150 can be incorporated into the fuselages of fixed wing aircraft or helicopters.

A plurality of vibration sensors 154, such as in the form of accelerometers, together with a speed sensor 156, such as in the form of a tachometer, collects information concerning ongoing vibrations and routes this information to a transfer station 158. Within the transfer station 158, as described particularly with respect to the transfer station 12 of FIG. 1, the plurality of vibration sensor signals and the speed sensor signals are combined into a collective sensor signal and transmitted under a protective digital communications protocol over the wire pairings 160 to a base station 162.

The collective sensor signal is divided into its separate sensor signals within the base station 162, as also described particularly with respect to the base station 14 of FIG. 1. The separate sensor signals are processed within the base station 162 according to a conventional algorithm for outputting control signals for actuators 170, 172, and 174. The output signals are preferably delivered in a digital form along a common bus 164 to a series of amplifiers 176, 178, and 180 that separately receive power from a power source 182 for driving the actuators 170, 172, and 174 in accordance with the output control signals.

The numbers of sensors and actuators are adapted to particular applications. The actuators 170, 172, and 174 can be electromagnetic force generators fixed to the vibrating structure 184, such as the fuselage, and including electromagnetically driven masses via linear oscillation or rotation. Preferably, the electromechanical actuators exploit mechanical resonance to amplify the force at the N/rev frequency. Typical tuning frequencies for helicopter applications range from 17.2 Hertz to 28 Hertz at a force of 300 pounds to 1200 pounds.

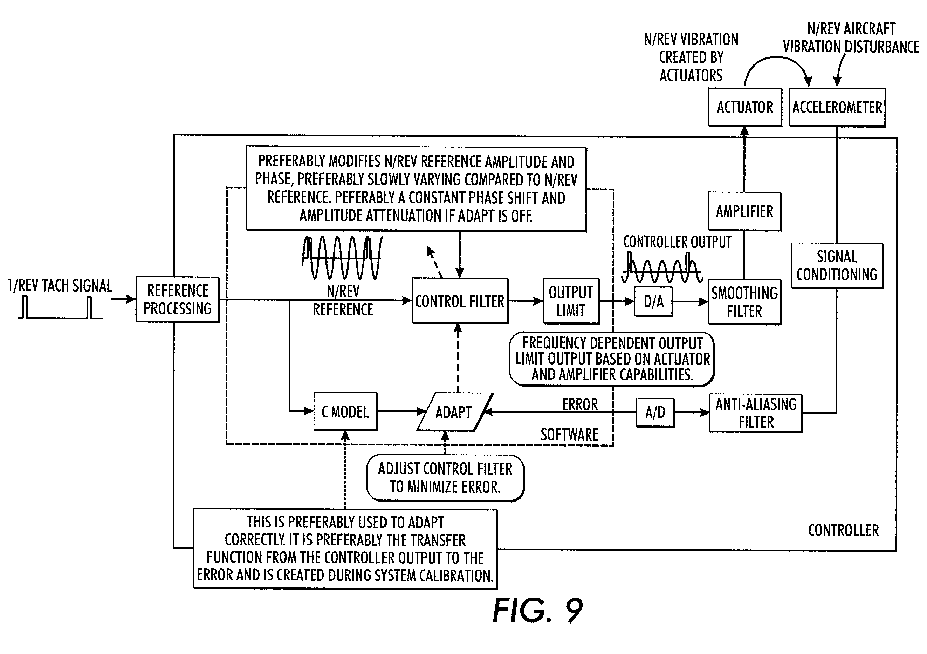

The control algorithm is preferably based on a time domain Filtered-X least mean square (LMS) such as the LORD NVXTM systems for fixed wing aircraft including the DC-9 and Citation X available from Lord Corporation of Cary, North Carolina. A block diagram showing Filtered-X LMS Algorithm used in LORD® AVCS is presented in FIG. 9.

The system design process for adapting the active vibration control system to a helicopter or other aircraft is preferably carried out in three stages. In the first stage, transfer functions are obtained and fuselage vibrations at various flight conditions are measured. In the second stage, the measured data is used to optimize a system by defining the location and force capacity of each actuator and the location of each of the accelerometers. In the third stage, the active vibration control system is installed on the aircraft and performance is demonstrated through flight testing.

Measurements of in-flight vibration as well as the transfer functions are compared between potential actuator locations and control accelerometer locations. This data is preferably collected for three of more weight and center of gravity configurations of the aircraft including the minimum takeoff weight and the maximum takeoff weight. For each of these configurations, a flight tests is also performed to measure the in-flight vibration. Typically, each flight consists of 20 stable (steady state) and transient flight conditions.

An optimization analysis is performed using the collected data for determining the appropriate number of locations of sensors and actuators and for predicting the associated vibration reduction performance and its associated weight penalty. A few different configurations of active vibration control system are preferably installed for demonstrating in-flight performance. Vibration measurements are recorded with the system activated and de-activated for purposes of comparison. The system performance is tested under transient conditions like turns and flare. The system stability and tracking is evaluated and final software tuning is performed.

The digital processing link 152, similar to the digital processing links 10, is expected to reduce weight, cost, and complexity by eliminating long runs of wires between sensors or other appliances and the controller and to improve reliability by exploiting a digital communication protocol and incorporating protective circuitry at both ends of the transmissions.

It will be apparent to those skilled in the art that various modifications and variations can be made to the invention without departing from the spirit and scope of the invention. Thus, it is intended that the invention cover the modifications and variations of this invention provided they come within the scope of the appended claims and their equivalents. It is intended that the scope of differing terms or phrases in the claims may be fulfilled by the same or different structure(s) or step(s).

Some preferred embodiments (EM) of the invention are as follows:
1. A motion control system for regulating vibrations comprising
   a plurality of sensors for acquiring information about the vibrations,
   an actuator for counteracting the vibrations,
   a controller for processing the information acquired from the sensors and for controlling the actuator to counteract the vibrations,
   a digital processing link between the plurality of sensors and the controller comprising
      a transfer station including a multiplexer/demultiplexer for combining signals from the sensors into a collective signal and a communication node for transmitting the collective signal under a communications protocol,
      a base station including another communication node for receiving the collective signal under the communications protocol and a demultiplexer/multiplexer for dividing the collective signal into a plurality of separately processable digital signals, and
      data transmit and receive lines interconnecting the transfer and base stations, and
   the controller being arranged for processing the digital signals from the base station and outputting a control signal for controlling the actuator for regulating vibrations.
2. The motion control system of EM 1 in which the communication node of the base station transmits the control signal for the actuator under the communications protocol.
3. The motion control system of EM 2 in which the communication node of the base station transmits the control signal for the actuator over the data transmit and receive lines to the communication node of the transfer station.
4. The motion control system of EM 3 in which (a) the actuator is one of a plurality of actuators, (b) the controller outputs multiple control signals, (c) the demultiplexer/multiplexer of the base station combines the multiple control signals into a collective control signal for transmission over the data transmit and receive lines, and (d) the multiplexer/demultiplexer of the transfer station divides the collective control signal into a plurality of control signals that are directed to the plurality of actuators.
5. The motion control system of EM 1 in which the actuator is one of a plurality of actuators and further comprising a second digital processing link between the base station and a second transfer station interconnecting the plurality of actuators with the base station.
6. The motion control system of EM 5 in which the demultiplexer/multiplexer of the base station combines output control signals for the actuators into a collective output control signal, and the communication node of the base station transmits the collective output control signal under the communications protocol to the second transfer station.
7. The motion control system of EM 6 in which a communication node of the second transfer station receives the collective output control signal and a multiplexer/demultiplexer of the second transfer station divides the collective output control signal into a plurality of control signals to the actuators.
8. The motion control system of EM 1 further comprising
   a power supply associated with the base station for transmitting electrical power over the data transmit and receive lines, and
   a transformer associated with the transfer station for receiving electrical power over the data transmit and receive lines and for conditioning the electrical power for delivery to one or more of the sensors
9. The motion control system of EM 1 in which the communication node of the transfer station provides for converting the collective signal into a series of frames having a prescribed format for monitoring and resending errant transmissions.
10. The motion control system of EM 9 in which the communication node of the transfer station provides for temporally spreading energy content of the collective signal over the data transmit lines to reduce interference.
11. The motion control system of EM 10 in which the communication node of the transfer station includes a disconnect to avoid transmitting a lightning surge.
12. The motion control system of EM 1 in which the transfer station includes an analog to digital converter to convert analog signals from the sensors into digital signals.
13. The motion control system of EM 1 in which the actuator includes two or more eccentric masses that are relatively angularly positionable about a rotational axis under the influence of an electric coil.
14. The motion control system of EM 13 in which the plurality of sensors include accelerometers for measuring vibration and other sensors for measuring the relative angular positions of the eccentric masses.
15. The motion control system of EM 1 in which the actuator amplifies force at one or more tuned frequencies.
16. The motion control system of EM 15 in which the actuator includes one or more eccentric masses that are rotatable about a rotation axis.
17. The motion control system of EM 15 in which the actuator includes a translatable mass that is reciprocable along a linear axis.
18. The motion control system of EM 1 in which the plurality of sensors include accelerometers used for sensing vibration.
19. The motion control system of EM 18 in which the transfer station is positioned for reducing an average distance between the transfer station and the plurality of sensors.
20. An active balancer for a rotatable shaft comprising one
   or more eccentric masses positionable with respect to a rotational axis of the rotatable shaft,
   a driver for repositioning the one or more eccentric masses with respect to the rotational axis of the rotatable shaft,
   a plurality of sensors including one or more rotation sensors together with one or more vibration sensors for monitoring performance characteristics of the rotatable shaft,
   a controller for processing the information acquired from the sensors and for controlling the operation of the driver to reduce vibrations in the rotatable shaft,
   a transfer station collecting information from the sensors and a base station connected to the controller, and
   a communications protocol for sending and receiving data between the transfer and base stations in a prescribed format for monitoring and resending errant transmissions.
21. The active balancer of EM 20 in which the driver is formed as a part of a coil block within which one or more of the plurality of sensors are embedded.
22. The active balancer of EM 21 in which the plurality of sensors include one or more sensors within the coil block for monitoring the position of the one or more eccentric masses.
23. The active balancer of EM 20 in which the transfer station includes a multiplexer/demultiplexer for combining signals from the sensors into a collective signal and a communication node for transmitting the collective signal under the communications protocol.
24. The active balancer of EM 23 in which the base station includes another communication node for receiving the collective signal under the communications protocol and a demultiplexer/multiplexer for dividing the collective signal into a plurality of separately processable digital signals.
25. The active balancer of EM 20 further comprising data transmit and receive lines connecting the transfer and base stations for exchanging information under the communications protocol, and a power supply associated with the base station for transmitting electrical power over the data transmit and receive lines to the transfer station.
26. The active balancer of EM 25 further comprising one or more power transmission pathways from the transfer station to one or more of the plurality of sensors.
27. An active vibration control system for minimizing vibrations in a structure that supports a member for rotation comprising
   a plurality of sensors mounted with the structure for monitoring vibration,
   one or more actuators that drive a movable mass at tuned frequencies,
   a controller that receives information from the plurality of sensors and controls operation of the one or more actuators for cancelling sensed vibrations within the structure,
   a transfer station collecting information from the sensors and a base station connected to the controller and
   a communications protocol for sending and receiving data between the transfer and base stations in a prescribed format for monitoring and resending errant transmissions.
28. The active vibration control system of EM 27 in which the transfer station is located centrally among the sensors for reducing an average distance between the sensors and the transfer station.
29. The active vibration control system of EM 27 further comprising data transmit and receive lines connecting the transfer and base stations for transferring information under the communications protocol, and a power supply associated with the base station for transmitting electrical power in addition to data over the data transmit and receive lines to the transfer station.
30. The active vibration control system of EM 29 further comprising one or more power transmission pathways from the transfer station to one or more of the plurality of sensors.
31. The active vibration control system of EM 27 in which the transfer station includes a multiplexer/demultiplexer for combining signals from the sensors into a collective signal and a first communication node for transmitting the collective signal under the communications protocol.
32. The active vibration control system of EM 31 in which the base station includes a second communication node for receiving the collective signal under the communications protocol and a demultiplexer/multiplexer for dividing the collective signal into a plurality of separately processable digital signals.
33. A method of counteracting vibration comprising steps of
   monitoring vibrations using a plurality of sensors,
   outputting signals from the plurality of sensors for conveying information about the vibrations,
   combining the signals from the sensors at a transfer station into a collective signal,
   transmitting the collective signal over data transmit and receive lines under a communications protocol in a prescribed format for monitoring and resending errant transmissions,
   receiving the collective signal under the communications protocol at a base station associated with a controller,
   transmitting power from a power source associated with the base station over the data transmit and receive lines to the transfer station,
   distributing the power from the transfer station to one or more of the sensors,
   dividing the collective signal received at the base station into a plurality of processable digital signals, and
   processing the digital signals within the controller, and
   outputting a signal from the controller to an actuator for counteracting the monitored vibrations.
34. The method of EM 33 including a step of distributing the sensors according to results from an optimization study.
35. The method of EM 33 including a step of locating the transfer station among the sensors for reducing an average distance between the sensors and the transfer station.
36. The method of EM 33 in which the step of transmitting the collective signal includes converting the collective signal into a series of frames having a prescribed format for monitoring and resending errant transmissions.
37. The method of EM 33 in which the step of transmitting the collective signal includes temporally spreading energy content of the collective signal over the data transmit lines to reduce interference.
38. The method of EM 33 including a step of converting analog signals from the sensors into digital signals.
39. A method of making a vibration control system for regulating vibrations, said method comprising steps of
   arranging a plurality of sensors for acquiring information about the vibrations,
   providing an actuator for counteracting the vibrations,
   providing a controller for processing the information acquired from the sensors and for controlling the actuator to counteract the vibrations,
   establishing a digital processing link between the plurality of sensors and the controller including the steps of
      combining signals from the sensors into a collective signal at a transfer station and transmitting the collective signal from the transfer station under a communications protocol, and
      receiving the collective signal at a base station under the communications protocol and dividing the collective signal into a plurality of separately processable digital signals, and
   processing the digital signals from the base station with the controller and outputting a control signal for controlling the actuator to regulate the vibrations.
40. The method of EM 39 including a step of locating the transfer station among the sensors for reducing an average distance between the sensors and the transfer station.
41. The method of EM 39 including a step of establishing a digital processing link between the controller and the actuator.
42. The method of EM 41 in which the actuator is one of a plurality of actuators and the step of establishing a digital processing link between the controller and the actuators includes combining output control signals from the controller into a collective output control signal at the base station and transmitting the collective output control signal from the base station under the communications protocol.
43. The method of EM 42 in which the step of establishing a digital processing link between the controller and the actuators includes receiving the collective output control signal at the transfer station under the communications protocol and dividing the collective output control signal into a plurality of separate control signals to the actuators.
44. The method of EM 42 in which the step of establishing a digital processing link between the controller and the actuators includes receiving the collective output control signal at a second transfer station under the communications protocol and dividing the collective output control signal into a plurality of separate control signals to the actuators.
45. A method of controlling machine vibrations, said method comprising steps of
   operating an active balancer for a machine rotatable shaft having one or more eccentric masses positionable with respect to a rotational axis of the machine rotatable shaft,
   monitoring vibration characteristics of the machine rotatable shaft using a plurality of sensors including one or more rotation sensors together with one or more vibration sensors,
   collecting information from the sensors at a transfer station and transmitting the collected information through a base station to a controller and
   sending and receiving data under a communications protocol between the transfer and base stations in a prescribed format for monitoring and resending errant transmissions,
   processing the information acquired from the sensors with the controller and for outputting from the controller a control signal for the active balancer, and
   repositioning the one or more eccentric masses of the active balancer with respect to the rotational axis of the machine rotatable shaft in response to the control signal for reducing vibrations in the machine rotatable shaft.
46. A method of controlling a plurality of vibrations in an aircraft structure, said method including steps of
   monitoring vibration in the aircraft structure using a plurality of sensors mounted with the structure,
      and
   collecting information from the sensors at a transfer station and transmitting the collected information to a base station connected to a controller and
   sending and receiving data under a communications protocol between the transfer and base stations in a prescribed format for monitoring and resending errant transmissions,
   processing the information from the plurality of sensors with the controller and outputting a control signal to one or more actuators that drive a movable mass at tuned frequencies, and
   operating the one or more actuators at the tuned frequencies for cancelling sensed vibrations within the structure, wherein the vibrations in the aircraft structure are regulated.

## Claims

1. An active balancer for a rotatable shaft comprising
one or more eccentric masses positionable with respect to a rotational axis of the rotatable shaft,
a driver for repositioning the one or more eccentric masses with respect to the rotational axis of the rotatable shaft,
a plurality of sensors including one or more rotation sensors together with one or more vibration sensors for monitoring performance characteristics of the rotatable shaft,
a controller for processing the information acquired from the sensors and for controlling the operation of the driver to reduce vibrations in the rotatable shaft,
a transfer station collecting information from the sensors and a base station connected to the controller, and
a communications protocol for sending and receiving data between the transfer and base stations in a prescribed format for monitoring and resending errant transmissions.

2. The active balancer of claim 1 in which the driver is formed as a part of a coil block within which one or more of the plurality of sensors are embedded.

3. The active balancer of claim 2 in which the plurality of sensors include one or more sensors within the coil block for monitoring the position of the one or more eccentric masses.

4. The active balancer of claim 1 in which the transfer station includes a multiplexer/demultiplexer for combining signals from the sensors into a collective signal and a communication node for transmitting the collective signal under the communications protocol.

5. The active balancer of claim 4 in which the base station includes another communication node for receiving the collective signal under the communications protocol and a demultiplexer/multiplexer for dividing the collective signal into a plurality of separately processable digital signals.

6. The active balancer of claim 1 further comprising data transmit and receive lines connecting the transfer and base stations for exchanging information under the communications protocol, and a power supply associated with the base station for transmitting electrical power over the data transmit and receive lines to the transfer station.

7. The active balancer of claim 6 further comprising one or more power transmission pathways from the transfer station to one or more of the plurality of sensors.

8. A method of controlling machine vibrations, said method comprising steps of
operating an active balancer for a machine rotatable shaft having one or more eccentric masses positionable with respect to a rotational axis of the machine rotatable shaft,
monitoring vibration characteristics of the machine rotatable shaft using a plurality of sensors including one or more rotation sensors together with one or more vibration sensors,
collecting information from the sensors at a transfer station and transmitting the collected information through a base station to a controller and
sending and receiving data under a communications protocol between the transfer and base stations in a prescribed format for monitoring and resending errant transmissions,
processing the information acquired from the sensors with the controller and for outputting from the controller a control signal for the active balancer, and
repositioning the one or more eccentric masses of the active balancer with respect to the rotational axis of the machine rotatable shaft in response to the control signal for reducing vibrations in the machine rotatable shaft.
